(19) Europäisches Patentamt
European Patent Office
Office européen des brevets

(11) Veröffentlichungsnummer: **0 010 591**
**A1**

(12) # EUROPÄISCHE PATENTANMELDUNG

(21) Anmeldenummer: **79103285.7**

(22) Anmeldetag: **05.09.79**

(51) Int. Cl.³: **C 07 C 131/00**
// A01N37/34

(30) Priorität: **25.09.78 DE 2841714**

(43) Veröffentlichungstag der Anmeldung: **14.05.80**
**Patentblatt 80/10**

(84) Benannte Vertragsstaaten: **AT BE CH DE FR GB IT LU NL SE**

(71) Anmelder: **BASF Aktiengesellschaft, Carl-Bosch-Strasse 38, D-6700 Ludwigshafen (DE)**

(72) Erfinder: **Buerstinghaus, Rainer, Dr., Dipl.-Chem., Weinbergstrasse 85, D-6940 Weinheim-Luetzelsachesen (DE)**
Erfinder: **Koenig, Karl-Heinz, Dr., Dipl.-Chem., Pierstrasse 8 A, D-6710 Frankenthal (DE)**
Erfinder: **Kiehs, Karl, Dr., Dipl.-Chem., Sudetenstrasse 22, D-6840 Lampertheim (DE)**

(54) **Verfahren zur Herstellung von 2,2-Dimethyl-4-cyan-butyraldoxim-N-methyl-carbamat.**

(57) Die vorliegende Erfindung betrifft ein Verfahren zur Herstellung von 2,2-Dimethyl-4-cyan-butyraldoxim-N-methyl-carbamat, das dadurch gekennzeichnet ist, daß 2,2-Dimethyl-4-cyan-butyraldoxim in Gegenwart der 1,05- bis 2fachen molaren Menge eines tertiären aliphatischen Amins mit einer mindestens äquimolaren Mengen Methylcarbaminsäurechlorid in Form einer konzentrierten Lösung von mindestens 8 Mol Methylcarbaminsäurechlorid pro Liter inertes organisches Lösungsmittel bei einer Temperatur im Bereich zwischen 0 und 30° C umgesetzt wird.

2,2-Dimethyl-4-cyan-butyraldoxim-N-methyl-carbamid ist als insektizider und akarizider Wirkstoff bekannt.

EP 0 010 591 A1

Verfahren zur Herstellung von 2,2-Dimethyl-4-cyan-butyraldoxim-N-methyl-carbamat

Die vorliegende Erfindung betrifft ein Verfahren zur Herstellung von 2,2-Dimethyl-4-cyan-butyraldoxim-N-methyl-carbamat, das als Insektizid und Akarizid Verwendung findet (DE-OS 20 15 527).

Es ist bekannt, daß man 2,2-Dimethyl-4-cyan-butyraldoxim-N-methylcarbamat durch Umsetzung von 2,2-Dimethyl-4-cyan-butyraldoxim mit Methylisocyanat in Gegenwart eines inerten Lösungsmittels und einer katalytischen Menge eines organischen Amins erhält (DE-OS 20 15 527). Dabei ist die Handhabung und Lagerung des Methylisocyanats, bedingt durch seine chemischen, physikalischen und toxikologischen Eigenschaften mit einem relativ hohen technischen Aufwand verbunden (s. Ullmanns Encyclopädie der technischen Chemie, 4. Auflage, Band 13, Seiten 347 bis 357 (1977)).

Es wurde nun gefunden, daß man 2,2-Dimethyl-4-cyan-butyraldoxim-N-methylcarbamat mit guter Ausbeute und in hoher Reinheit erhält, wenn man 2,2-Dimethyl-4-cyan-butyraldoxim in Gegenwart der 1,05- bis 2-fachen molaren Menge eines tertiären aliphatischen Amins mit einer mindestens äquimolaren Menge Methylcarbaminsäurechlorid in Form einer konzen-

H/Fe

trierten Lösung von mindestens 8 Mol Methylcarbaminsäurechlorid pro Liter inertes organisches Lösungsmittel bei einer Temperatur im Bereich zwischen 0 und 30°C umsetzt.

Die Umsetzung läßt sich durch folgende Reaktionsgleichung wiedergeben:

$$NC-CH_2-CH_2-\underset{CH_3}{\overset{CH_3}{\overset{|}{\underset{|}{C}}}}-CH{=}NOH + H_3C-NH-\underset{O}{\underset{\|}{C}}-Cl + R_3N \longrightarrow$$

$$NC-CH_2-CH_2-\underset{CH_3}{\overset{CH_3}{\overset{|}{\underset{|}{C}}}}-CH{=}N-O-\overset{O}{\overset{\|}{C}}-NHCH_3 + R_3\overset{\oplus}{N}H\ \ Cl^{\ominus}$$

Nach dem erfindungsgemäßen Verfahren läuft die Umsetzung überraschenderweise innerhalb von 10 bis 15 Minuten ab. Setzt man dagegen das Aldoxim in Gegenwart mindestens äquimolarer Mengen eines tertiären aliphatischen Amins mit einer verdünnten Lösung von Methylcarbaminsäurechlorid in einem inerten organischen Lösungsmittel um, so verläuft die Umsetzung wesentlich langsamer. Die Reaktionszeit beträgt 20 Stunden und mehr, wobei die Ausbeute schlechter ist als bei dem erfindungsgemäßen Verfahren, da aufgrund der geringen thermischen Stabilität von 2,2-Dimethyl-4-cyan-butyraldoxim-N-methylcarbamat unerwünschte Zersetzungsprodukte auftreten (DE-AS 25 13 163).

Darüber hinaus entfällt beim Arbeiten nach dem erfindungsgemäßen Verfahren die zusätzliche Stufe der technisch üblichen Herstellung von Methylisocyanat aus Methylcarbaminsäurechlorid, da dieses direkt eingesetzt werden kann.

Nach dem erfindungsgemäßen Verfahren wird Methylcarbaminsäurechlorid in mindestens äquimolaren Mengen, bezogen auf 2,2-Dimethyl-4-cyan-butyraldoxim, eingesetzt. Vorteilhaft verwendet man das Methylcarbaminsäurechlorid in 10- bis 20-fachem Überschuß. Das Methylcarbaminsäurechlorid wird dabei in Form einer konzentrierten Lösung von mindestens 8 Mol Methylcarbaminsäurechlorid pro Liter inertes organisches Lösungsmittel eingesetzt.

Zur Herstellung solcher konzentrierter Lösungen von Methylcarbaminsäurechlorid eignen sich Lösungsmittel wie Chloroform, Dichlormethan, Tetrachlormethan, 1,2-Dichloräthan, Diäthyläther, Dioxan, Tetrahydrofuran, Aceton, Methyläthylketon, Benzol, Toluol.

Zur Bindung des entstehenden Chlorwasserstoffs wird die Umsetzung in Gegenwart eines tertiären aliphatischen Amins durchgeführt. Das Amin wird dabei im Überschuß, zweckmäßigerweise in der 1,05- bis 2-fachen molaren Menge, eingesetzt. Geeignete Amine sind beispielsweise Trialkylamine, wie Triäthylamin, Dimethyläthylamin, Dimethylisopropylamin, oder Dialkylcycloalkylamine, wie Dimethylcyclohexylamin, oder tertiäre heterocyclische Amine, wie 1-Methyl-pyrrolidin, 1-Methyl-piperidin.

Die Temperatur, bei der man die Umsetzung ablaufen läßt, liegt im Bereich zwischen 0 und 30°C, vorzugsweise zwischen 20 und 25°C.

Zweckmäßigerweise wird die Umsetzung so durchgeführt, daß man 2,2-Dimethyl-4-cyan-butyraldoxim, gelöst in einem Überschuß an Amin, vorlegt und dann die konzentrierte Lösung von Methylcarbaminsäurechlorid in einem inerten organischen Lösungsmittel zutropft. Die Reaktionstemperatur wird dabei durch Außenkühlung zwischen 0 und 30°C gehalten. Die Umsetzung ist nach 10 bis 15 Minuten beendet. Anschließend werden

die flüchtigen Bestandteile des Reaktionsgemisches unter vermindertem Druck abgezogen und das Produkt aus dem Rückstand mit einem geeigneten Lösungsmittel, beispielsweise Methylenchlorid, extrahiert. Nach dem Abziehen des Lösungsmittels bleibt das Carbamat in Form eines hellgelben Öls zurück, das nach dem Animpfen durchkristallisiert.

Die folgenden Beispiele erläutern die Durchführung des erfindungsgemäßen Verfahrens im Vergleich zur Umsetzung mit verdünnter Methylcarbaminsäurechloridlösung, die als solche direkt zum 2,2-Dimethyl-4-cyan-butyraldoxim und zum Amin zugegeben oder aber durch Vorlegen von Lösungsmittel im Reaktionsgemisch gebildet werden kann.

Beispiel 1

a) Umsetzung mit einer konzentrierten Methylcarbaminsäurechloridlösung

105,1 Gewichtsteile 2,2-Dimethyl-4-cyan-butyraldoxim werden in 113,7 Gewichtsteilen Triäthylamin gelöst. Unter Rühren wird eine Lösung von 77 Gewichtsteilen Methylcarbaminsäurechlorid in 100 Volumenteilen Chloroform hinzugetropft, wobei die Temperatur der Mischung durch Außenkühlung zwischen 20 und 25°C gehalten wird. 15 Minuten nach beendeter Zugabe werden die flüchtigen Bestandteile der Reaktionsmischung bei 0,13 mbar und 25°C abgezogen, und der Rückstand wird mit 200 Volumenteilen Methylenchlorid extrahiert. Man wäscht den Extrakt einmal mit verdünnter Natriumhydrogencarbonatlösung sowie dreimal mit Wasser und trocknet über Natriumsulfat. Nach dem Verdampfen des Lösungsmittels verbleiben 122,6 Gewichtsteile, entsprechend einer Ausbeute von 83 % der Theorie, eines hellgelben sirupösen Öles, welches nach dem Abziehen letzter Lösungsmittelanteile unter vermindertem Druck

durchkristallisiert; Fp 41 bis 43°C. Das erhaltene Produkt erweist sich als $^1$H-NMR-spektroskopisch reines 2,2-dimethyl-4-cyan-butyraldoxim-N-methylcarbamat.

b) Umsetzung mit einer verdünnten Methylcarbaminsäurechloridlösung

105,1 Gewichtsteile 2,2-Dimethyl-4-cyanbutyraldoxim und 113,7 Gewichtsteile Triäthylamin werden in 300 Volumenteilen Chloroform gelöst. Dann wird unter Rühren bei gleichzeitiger Kühlung eine Lösung von 77 Gewichtsteilen Methylcarbaminsäurechlorid in 100 Volumenteilen Chloroform hinzugetropft, wobei die Temperatur der Mischung zwischen 20 und 25°C liegen soll. Man läßt weitere 20 Stunden bei dieser Temperatur rühren, saugt vom gebildeten Niederschlag ab und engt das Filtrat bei 20°C unter vermindertem Druck ein. Das verbleibende Öl wird in 250 Volumenteilen Methylenchlorid aufgenommen, einmal mit verdünnter Natriumhydrogencarbonatlösung und zweimal mit Wasser gewaschen. Nach dem Trocknen der organischen Phase über Natriumsulfat wird das Lösungsmittel unter vermindertem Druck entfernt, wobei 118,2 Gewichtsteile eines sirupösen Öls verbleiben, das laut $^1$H-NMR-Spektrum zu maximal 86 % aus 2,2-Dimethyl-4-cyanbutyraldoxim-N-methylcarbamat besteht. Das Produkt läßt sich durch Animpfen nicht zur Kristallisation bringen.

Beispiel 2

a) Umsetzung mit einer konzentrierten Methylcarbaminsäurechloridlösung

Eine Lösung von 84,1 Gewichtsteilen 2,2-Dimethyl-4-cyan-butyraldoxim in 121,4 Gewichtsteilen Triäthylamin wird unter heftigem Rühren mit einer Lösung von 56,1 Gewichtsteilen Methylcarbaminsäurechlorid in 73 Volumenteilen Aceton ver-

setzt. Durch Außenkühlung wird die Temperatur der Mischung zwischen 20 und 25°C gehalten. 15 Minuten nach Beendigung der Zugabe werden die flüchtigen Bestandteile des Reaktionsansatzes bei 1,1 mbar und 25°C abgezogen, der Rückstand wird mit 190 Volumenteilen Methylenchlorid extrahiert, und die so erhaltene organische Phase wird dreimal mit Wasser gewaschen. Nach dem Trocknen über Natriumsulfat wird das Lösungsmittel unter vermindertem Druck vollständig entfernt, wobei 103 Gewichtsteile (Ausbeute: 87 % der Theorie) eines zähen Öles verbleiben, welches nach dem Animpfen durchkristallisiert. Fp 40,5 bis 43°C. Nach seinem $^1H$-NMR-Spektrum besteht das erhaltene Produkt aus reinem 2,2-Dimethyl-4-cyan-butyraldoxim-N-methylcarbamat.

b) Umsetzung mit einer verdünnten Methylcarbaminsäurechloridlösung

56,1 Gewichtsteile 2,2-Dimethyl-4-cyan-butyraldoxim und 44,5 Gewichtsteile Triäthylamin werden in 300 Volumenteilen Aceton gelöst. Dann tropft man unter Rühren bei gleichzeitiger Kühlung eine Lösung von 37,4 Gewichtsteilen Methylcarbaminsäurechlorid in 100 Volumenteilen Aceton so schnell hinzu, daß die Temperatur des Reaktionsgemisches stets zwischen 20 und 25°C liegt. Man läßt weitere 20 Stunden bei dieser Temperatur rühren, saugt vom gebildeten Niederschlag ab und engt das Filtrat bei 20°C unter vermindertem Druck ein. Das verbleibende Öl wird in 250 Volumenteilen Methylenchlorid aufgenommen, einmal mit verdünnter Natriumhydrogencarbonatlösung und zweimal mit Wasser gewaschen. Nach dem Trocknen der organischen Phase über Natriumsulfat wird das Lösungsmittel unter vermindertem Druck entfernt, wobei 65,7 Gewichtsteile eines zähen, hellgelben Öles verbleiben, das nach seinem $^1H$-NMR-Spektrum zu maximal 88 % aus 2,2-Dimethyl-4-cyan-butyraldoxim-N-methylcarbamat besteht.

## Beispiel 3

Ein Reaktionsgemisch aus 2,2-Dimethyl-4-cyan-butyraldoxim, Triäthylamin, Methylcarbaminsäurechlorid und Aceton entsprechend Beispiel 2 b) wird bei einer Temperatur von 20 bis 25°C bis zu 48 Stunden gerührt. Während der Umsetzung werden Proben zur $^1$H-NMR-spektroskopischen Untersuchung entnommen; dabei ergibt sich folgender Zusammenhang zwischen Reaktionszeit und Umsatz:

| Zeit (h) | 0,083 | 0,25 | 1 | 2 | 5 | 18 | 24 | 48 |
|---|---|---|---|---|---|---|---|---|
| Mol% 2,2-Dimethyl-4-cyan-butyraldoxim-N-methylcarbamat | 23 | 36 | 48 | 64 | 77 | 91 | 90 | 89 |

## Patentanspruch

Verfahren zur Herstellung von 2,2-Dimethyl-4-cyan-butyraldoxim-N-methyl-carbamat, <u>dadurch gekennzeichnet</u>, daß man 2,2-Dimethyl-4-cyan-butyraldoxim in Gegenwart der 1,05- bis 2-fachen molaren Menge eines tertiären aliphatischen Amins mit einer mindestens äquimolaren Menge Methylcarbaminsäurechlorid in Form einer konzentrierten Lösung von mindestens 8 Mol Methylcarbaminsäurechlorid pro Liter inertes organisches Lösungsmittel bei einer Temperatur im Bereich zwischen 0 und 30°C umsetzt.

0010591

Nummer der Anmeldung

Europäisches Patentamt

# EUROPÄISCHER RECHERCHENBERICHT

EP 79 103 285.7

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| D | DE - A - 2 015 527 (AMERICAN CYANAMID)<br>* Seiten 5, 6 *<br>-- | 1 | C 07 C 131/00<br>//A 01 N 37/34 |
| | DE - A - 2 113 752 (AGRIPAT)<br>* Seiten 3, 4 *<br>-- | 1 | |
| A | DE - A1 - 2 513 163 (AMERICAN CYANAMID)<br>---- | | |

RECHERCHIERTE SACHGEBIETE (Int. Cl.3)

C 07 C 131/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 16-01-1980 | FROELICH |